# EUROPEAN PATENT SPECIFICATION

(11) **EP 3 995 925 B1**
(45) Date of publication and mention of the grant of the patent: **30.08.2023**
(21) Application number: 21206670.8
(22) Date of filing: 05.11.2021
(51) Int. Cl.: G05D 1/02

(54) **AUTONOMOUS MOBILE ROBOT, TRANSPORTER, AUTONOMOUS MOBILE ROBOT CONTROL METHOD, AND TRANSPORTER CONTROL METHOD**
AUTONOMER MOBILER ROBOTER, TRANSPORTER, STEUERUNGSVERFAHREN FÜR AUTONOMEN MOBILEN ROBOTER UND TRANSPORTERSTEUERUNGSVERFAHREN
ROBOT MOBILE AUTONOME, TRANSPORTEUR, PROCÉDÉ DE COMMANDE DE ROBOT MOBILE AUTONOME ET PROCÉDÉ DE COMMANDE DE TRANSPORTEUR

(30) Priority: 06.11.2020 JP 2020186088
(43) Date of publication of application: 11.05.2022
(73) Proprietor: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: YAMAMOTO, Daisuke, Minato-ku, Tokyo, 105-0023 (JP); OGAWA, Hideki, Minato-ku, Tokyo, 105-0023 (JP); SONOURA, Takafumi, Minato-ku, Tokyo, 105-0023 (JP); TOKURA, Seiji, Minato-ku, Tokyo, 105-0023 (JP); MORI, Akihiro, Minato-ku, Tokyo, 105-0023 (JP); ITO, Yusuke, Minato-ku, Tokyo, 105-0023 (JP); MAKI, Yasunori, Minato-ku, Tokyo, 105-0023 (JP); YUI, Hideto, Kawasaki-shi, Kanagawa, 212-0013 (JP); KISHI, Nobuyuki, Kawasaki-shi, Kanagawa, 212-0013 (JP)
(74) Representative: Hoffmann Eitle

(56) References cited:
- WO-A1-2021/170852
- US-A1- 2015 362 921
- US-A1- 2017 153 641
- US-A1- 2018 180 421

## Description

### FIELD

Embodiments described herein relate generally to an autonomous mobile robot, a transporter, an autonomous mobile robot control method, and a transporter control method.

### BACKGROUND

Conventionally, an AGV (Automatic Guided Vehicle) has been used. For example, the AGV is configured to calculate a self-location by measuring a direction and a distance with respect to a reflector provided on a wall using a laser range finder, and automatically travels in accordance with the calculation result.

Furthermore, a technique of simultaneously carrying out estimation of localization and formation of an environment map, which is referred to as SLAM (Simultaneous Localization and Mapping), is known.

WO 2021/170852 A1 discloses a method for controlling an automatic guided vehicle (AGV) to transport at least two loads from a load picking-up area to an operating area in which the at least two loads are to be placed in corresponding loading areas. The method comprises: picking-up a first load with the AGV in the load picking-up area, guiding the AGV with the first load by guiding means from the load picking-up area to the operating area, moving the AGV in the operating area to map virtual boundaries in the operating area within which the at least two loads are to be placed in the corresponding loading areas, generating a loading pattern for placing the at least two loads in the corresponding loading areas within the virtual boundaries in the operating area and generating travel trajectories which the AGV has to travel with each of the at least two loads to place the at least two loads in the corresponding loading areas, placing the first load in the corresponding loading area based on the generated loading pattern and the generated travel trajectory for the first load, mapping the operating area with the placed first load placed in the corresponding loading area and verifying whether the first load in the corresponding loading area corresponds to the loading pattern in such a manner that the at least one further load is able to be placed according to the loading pattern, and if the first load in the corresponding loading area does not correspond to the loading pattern in such a manner that the at least one further load is able to be placed according to the loading pattern, correcting the position and/or orientation of the first load in such a manner that the at least one further load is able to be placed according to the loading pattern.

US 2018/0180421 A1 discloses a method including: determining locations of a plurality of candidate landmarks in relation to a robot based on sensor data from at least one sensor on the robot; determining a plurality of sample sets, wherein each sample set comprises a subset of the plurality of candidate landmarks and a plurality of corresponding mapped landmarks; determining a transformation for each sample set that relates the candidate landmarks from the subset to the corresponding mapped landmarks; applying the determined transformation for each sample set to the plurality of candidate landmarks to determine a number of inliers associated with each sample set based on distances between the transformed plurality of candidate landmarks and a plurality of neighbouring mapped landmarks; selecting a sample set from the plurality based on the number of inliers associated with each sample set; and estimating a pose of the robot based on the selected sample set.

US 2017/0153641 A1 discloses an autonomous traveling device including: a vehicle body, a traveling body to move the vehicle body, a ranging device to consecutively change a direction of emission of light beams while optically scanning a scanning range, and a reflection body to change a direction of an optical path of at least part of light beams emitted from the ranging device and reflected to an area other than a center area of the scanning range. Further, an autonomous traveling device includes an optical path changing device. The optical path changing device changes an angle of inclination downwardly relative to a scanning plane of the ranging device and changes a direction of an incident light from a lateral direction to a forward direction of the vehicle body. Further, the optical path changing device changes a direction of an incident light toward a foot area of the vehicle body.

### SUMMARY

The present invention provides a transporter comprising an autonomous mobile robot, in accordance with claim 1.

The present invention also provides a transporter control method, in accordance with claim 11.

### BRIEF DESCRIPTION OF THE DRAWINGS

FIG. 1 is a view showing a configuration of a transporter according to a first embodiment.
FIG. 2 is a perspective view showing the configuration of the transporter according to the first embodiment.
FIG. 3 is a block diagram showing the configuration of the transporter according to the first embodiment.
FIG. 4 is a flowchart showing processes carried out by the transporter according to the first embodiment.
FIG. 5 is a view showing a configuration of a transporter according to a second embodiment.
FIG. 6 is a block diagram showing the configuration of the transporter according to the second embodiment.
FIG. 7 is a block diagram showing the configuration of the transporter according to a fifth embodiment.

### DETAILED DESCRIPTION

According to one embodiment, an autonomous mobile robot has a driver, a first detector, a second detector, a localization estimation part, a route-generating part, and a control part. The autonomous mobile robot is autonomously movable. The driver is configured to cause the autonomous mobile robot to move. The first detector is provided at a position higher than a position in height of an object present around the autonomous mobile robot. The first detector is configured to obtain first data by scanning the object at a first region around the autonomous mobile robot. The second detector is configured to obtain second data by scanning the object at a second region around the autonomous mobile robot. The localization estimation part is configured to calculate an estimated position of the autonomous mobile robot in a predetermined region in accordance with the first data. The route-generating part is configured to calculate a position of the object present around the autonomous mobile robot in accordance with the second data. The route-generating part is configured to calculate a route to a target position in accordance with the estimated position and the position of the object. The control part is configured to control the driver in accordance with the route. The control part is configured to cause the autonomous mobile robot to travel to the target position.

Hereinafter, an autonomous mobile robot, a transporter, an autonomous mobile robot control method, and a transporter control method according to an embodiment will be described with reference to the drawings. In the embodiment, the autonomous mobile robot is applicable to a transporter. In the embodiment, the transporter is configured to transport a transport object. The transporter transfers the transport object in which packages, commercial products, or the like are loaded in a distribution center or a back yard of a shop.

### (First Embodiment)

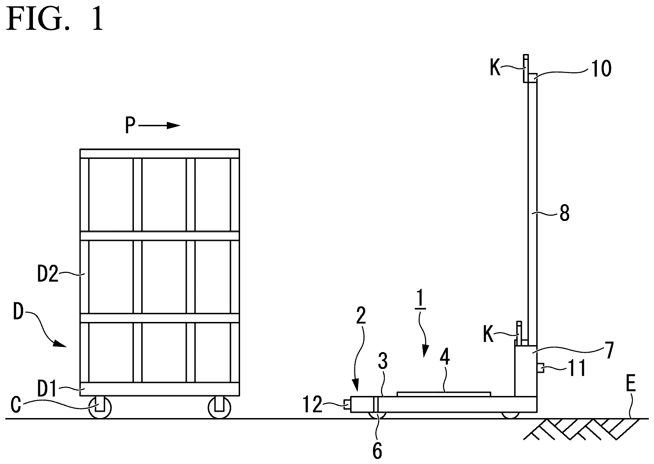

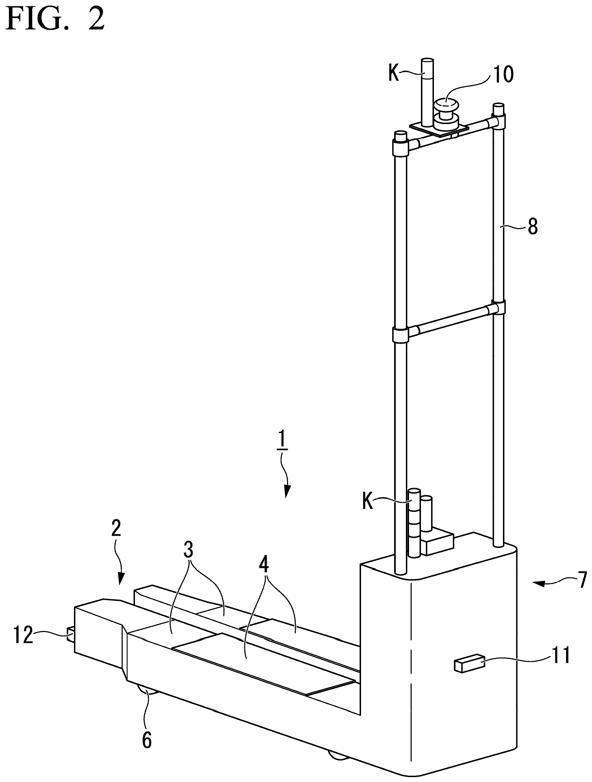

As shown in FIGS. 1 and 2, a transporter 1 (referred to as a locomotion robot or an autonomous mobile robot) transports a transport object D. The transport object D is, for example, a roll box pallet. A travel direction P in which the transport object D moves is determined. The transport object D has a lower surface and an upper surface. The transport object D includes, for example, a bottom plate D1 formed in a rectangular plate shape, a plurality of wheels C (leg) provided on the lower surface of the bottom plate D1, and a frame D2 provided on the upper surface of the bottom plate D1.

A transport object (not shown in the drawings) is to be mounted on the upper surface side of the bottom plate D1. The frame D2 is provided so as to surround the transport object on the upper surface side of the bottom plate D1. The frame D2 has four faces. The frame D2 is formed so as to surround a circumference of the transport object, for example, on four surfaces of the transport object above the bottom plate D1. At least one of the four faces of the frame D2 is an openable and closable door. The frame D2 may have a configuration in which one face of the frame D2 is opened without providing a door.

Four wheels C are disposed at four corners on the lower surface side of the bottom plate D1. The wheels C cause the bottom plate D1 to move with respect to the floor surface E. The wheels C are two pairs of wheels provided on the lower surface side of the bottom plate D1. The two pairs of the wheels are spaced at a predetermined distance in the travel direction P. With the aforementioned configuration, the transport object D travels on the floor surface E when an external force is applied thereto in the travel direction P. The transport object D is transferred to a target position by the transporter 1.

The transporter 1 includes, for example, a transfer carriage 2 that transfers the transport object D and a plurality of detectors used for sensing provided at the transfer carriage 2. The detectors includes a first detector 10, a second detector 11, and a third detector 12. The transfer carriage 2 includes, for example, a load base 3 having an upper surface. The bottom plate D1 is to be mounted on the upper surface of the load base 3. The load base 3 has a lower surface. A plurality of wheels 6 are provided on the lower surface of load base 3. The wheels 6 are driven by a driver 14 (refer to FIG. 2) as described hereinbelow. As the wheels 6 are driven, the load base 3 can travel on the floor surface E.

The wheels 6 are driven by a commonly-used two-wheel independent drive system using the driver 14 described below. As the wheels 6 are driven, the transporter 1 travels. The direction of movement of the transporter 1 is controlled by a control part 110 as described hereinbelow. The wheels 6 may be driven by use of a steering wheel or a particular kind of wheel so as to omnidirectionally travel.

The height of the load base 3 is determined such that the load base 3 can enter into a region between the bottom plate D1 of the transport object D and the floor surface E. A lifter 4 is provided on the upper surface side of the load base 3. The height of the lifter 4 is adjustable. The lifter 4 is controlled by the control part 110 described later. When the load base 3 is inserted between the bottom plate D1 and the floor surface E, the lifter 4 increases the position thereof in height and lifts up the transport object D. The load base 3 transfers the transport object D in a state in which the transport object D is lifted up by the lifter 4. The load base 3 may transfer the transport object D while generating a friction between the lower surface side of the bottom plate D1 and an upper surface side of the lifter 4 without lifting up the transport object D. The transfer carriage 2 may transfer the transport object D by traction while hooking the transport object D using a pin or the like without providing the load base 3 and the lifter 4.

A housing 7 is provided at, for example, a front side in the travel direction P on the load base 3 (refer to FIG. 1). A controller 100 described later is housed in the housing 7. The housing 7 is formed in a rectangular parallelepiped shape. At the front side of the load base 3, the housing 7 is provided upright from the upper surface side of the load base 3. A rotating light K is provided at an upper surface side of the housing 7. The rotating light K informs operators around the transporter 1 that the transporter 1 is approaching. The rotating light K has a light source, for example, that rotates to cause the operators to visually recognize the transporter 1, and the rotating light K attracts the attention of the operators to the approaching transfer carriage 2.

A support member 8 is provided at an upper surface side of the housing 7. The support member 8 is formed in a rod shape. The support member 8 is configured to be provided upright. The support member 8 is formed in, for example, a frame shape when viewed from a direction along the travel direction P. Particularly, the support member 8 has a configuration in which two rod members are provided upright, and another rod member is further connected to the two rod members so as to intersect therewith. The support member 8 may be formed so as to have a reinforced truss structure that increases bending rigidity in a front-back direction for preventing vibration or may be formed so as to have other structures.

The first detector 10 and the rotating light K are provided at an upper end of the support member 8. The first detector 10 detects an object around the transporter 1. The first detector 10 is, for example, an LRF (Laser Range Finder). The first detector 10 scans the object with a laser beam, receives reflection light reflected from the object, and measures a distance to the surface of the object in accordance with a phase difference of the reflection light or a differential arrival time. The first detector 10 obtains first data by scanning the object at a first region around the transfer carriage 2. The first detector 10 scans the object in a predetermined angle range, for example, in a planar direction around the first detector 10 and obtains the first data associated with a distance to the surface of the object around the first detector 10 at a plurality of points.

The first data is used to generate a localization-and-estimation map of the transfer carriage 2 as described hereinbelow. In the case in which there is a difference in an ambient environment between a time of generating the localization-and-estimation map and a time of practically carrying out a transfer operation, a degree of accuracy of estimating the localization becomes degraded. In a distribution center, a back yard of a shop, or the like, a human is present around the transporter 1, other roll box pallets are placed, and the ambient environment of the transporter 1 varies from hour to hour. Moreover, for example, in a distribution center or a back yard of a shop, commercial products are often on a store shelf or the like near the floor surface, and the number of products temporally varies.

Consequently, depending on the above, a situation of the object to be detected by the LRF may vary temporally. In the distribution center, for example, roll box pallets or operators frequently move, and the object to be detected by the LRF varies. The ambient environment includes an environment inherence object and a surrounding existence object. The environment inherence object means an inherence object, for example, a circumference wall, fixed equipment, a pillar, or the like. It is assumed that the position or the shape of the environment inherence object is not changed when the transfer carriage 2 is driven. The surrounding existence object is an object other than the environment inherence object of the ambient environment. It is assumed that the position or the shape of the surrounding existence object is changed when the transfer carriage 2 is driven. The surrounding existence object is, for example, an object present around the transfer carriage 2 (a human, a transport object such as transfer carriage, roll box pallet, or the like).

As compared with the environment inherence object, the surrounding existence object is often located closer to the moving transfer carriage 2 than the environment inherence object. Furthermore, regarding the ambient environment, the environment inherence object such as the circumference wall, the fixed equipment, the pillar, or the like is not changed. Consequently, the first detector 10 is attached to a position in height which is assumed in advance such that the surrounding existence object of the ambient environment such as a transfer object, a movable object, or the like is not present. Particularly, the first detector 10 is provided at a position in height of the object (surrounding existence object) present around the transfer carriage 2.

In an environment in which there are a lot of movable objects or operators are present, it is preferable that the first detector 10 be attached to a position higher than that of the other transport object (roll box pallet) or the moving obstacle such as a human, which causes the ambient environment to be varied. The first detector 10 is provided at a position, for example, higher than or equal to 1.8 meters, which is a position higher than a body height of a common person. Heights of roll box pallets used in a distribution center or a back yard of a shop are different from each other. The first detector 10 is provided such that the height of the first detector 10 is manually adjustable so as to be higher than the position in height of an object, for example, a moving obstacle or the like present around the first detector. Additionally, an adjuster (not shown in the drawings) may be provided at the first detector 10. The adjuster can automatically adjust the position of the first detector 10 to be higher than the position in height of an object, for example, a moving obstacle or the like present around the first detector.

The second detector 11 that obtains second data by scanning the object is provided at a second region around the transfer carriage 2 at the forward side of the housing 7 in the travel direction P. The second detector 11 is, for example, an LRF. The second detector 11 scans the object with a laser beam, receives reflection light reflected from the object, and measures a distance to the surface of the object in accordance with a phase difference of the reflection light or a differential arrival time. The second detector 11 scans the object in a predetermined angle range, for example, in a planar direction in front of the second detector 11 and obtains the second data associated with a distance to the surface of the object in front of the second detector 11 at a plurality of points. The second detector 11 detects, for example, a transfer object or a movable object around the second detector 11. The movable object means, for example, a shelf that is optionally changeable in position, the other transport object D that is being temporarily halted, a transfer object such as a human, or the like.

The third detector 12 is provided at the back side of the load base 3 in the travel direction P. The third detector 12 obtains third data associated with positions of the wheels 6 (leg) provided at the lower portion of the transport object D. The third detector 12 is, for example, an LRF. The third detector 12 is attached to a lower position in order to detect the wheels 6. The third detector 12 scans the wheels 6 with a laser beam, receives reflection light reflected from the wheels 6, and measures a distance to the surface of the wheel 6 in accordance with a phase difference of the reflection light or a differential arrival time.

The third detector 12 scans the object in a predetermined angle range, for example, in a planar direction of the laser scanning direction and obtains the third data associated with a distance to the surface of the wheel 6 in front of the third detector 12 at a plurality of points. As described below, the positions of the wheels 6 supporting the transport object D are obtained in accordance with the third data detected by the third detector 12, and the load base 3 can be inserted between the pair of the wheels 6 facing each other in the travel direction P. A depth camera capable of obtaining distance information as well as the LRF may be used as the third detector 12. The third detector 12 may be configured of a plurality of infrared distance sensors.

Next, control of the transporter 1 will be described.

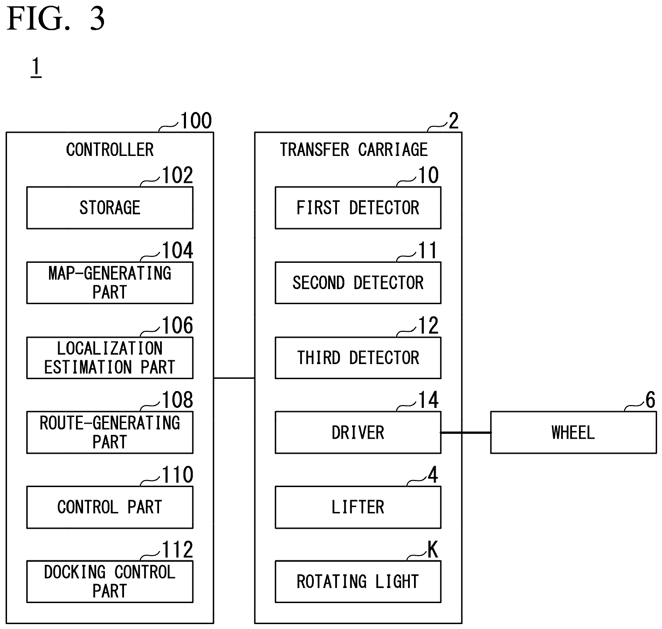

As shown in FIG. 3, movement of the transporter 1 is controlled by the controller 100. The controller 100 is housed in, for example, the housing 7. The controller 100 may be a device that may be configured by a server device and controls the transfer carriage 2 via a network. The transfer carriage 2 includes a power-supply device (not shown in the drawings) as well as the shown configuration. Here, the server device is a device capable of communicating with a plurality of transfer carriages 2 and is configured to concentratedly control the transfer carriages 2. For example, the server device includes a communicator configured to communicate with the transfer carriages 2, a processor such as CPU (Central Processing Unit), a storage, or the like.

The controller 100 includes, for example, a storage 102, a map-generating part 104, a localization estimation part 106, a route-generating part 108, a control part 110, and a docking control part 112. The storage 102 stores various data. The map-generating part 104 generates a map for estimating a position of the transporter 1. The localization estimation part 106 calculates an estimated position of the transfer carriage 2 in accordance with the first data obtained by the first detector 10 and the map. The route-generating part 108 calculates a route to a target position of the transporter 1 in accordance with the second data obtained by the second detector 11 and the estimated position. The control part 110 controls the driver 14 in accordance with the third data formed by the route and the third detector 12 and causes the transfer carriage to travel to the target position. The docking control part 112 controls docking with respect to the transport object D.

For example, as a processor such as CPU (Central Processing Unit) executes program (computer program, software) stored in the storage 102, a part or all of functional parts of the map-generating part 104, the localization estimation part 106, the route-generating part 108, the control part 110, and the docking control part 112 is operated. Furthermore, a part or all of the functions of the aforementioned constituent parts may be achieved by hardware (circuit part, including circuitry) such as LSI (Large Scale Integration Circuit), ASIC (Application Specific Integrated Circuit), FPGA (Field Programmable Gate Array), GPU (Graphics Processing Unit), or the like, or may be achieved by cooperation of software and hardware. The program may be stored in advance in a storage device such as a HDD (hard disk drive), a flash memory, or the like. The program may be stored in a removable recording medium such as a DVD, a CD-ROM, or the like. By loading the recording medium to a drive device, the program may be installed in the drive device.

A localization-and-estimation map is generated by SLAM in order to estimate the localization of the transporter 1. In the SLAM, it is assumed that the environment of generating the map is the same as the environment of movement of the locomotion robot. Initially, the localization-and-estimation map is generated by causing the transporter 1 to travel by a manual operation. When the transporter 1 travels in a predetermined region such as a business place, that is an object in which the transporter 1 travels, the first data generated by the first detector 10 is stored in the storage 102. The storage 102 is realized by a recording medium, for example, a RAM (Random Access Memory), a ROM (Read Only Memory), a HDD, a flash memory, or the like.

The map-generating part 104 uses, for example, the first data, calculates a two-dimensional shape associated with the environment inherence object such as the circumference wall, the fixed equipment, or the like, and generates the localization-and-estimation map. The map-generating part 104 may generate the localization-and-estimation map in accordance with the first data as well as the localization-and-estimation map in accordance with the second data. The map-generating part 104 may separately generate the localization-and-estimation map at the horizontal plane at a measured height of the first detector 10 in accordance with construction drawing data. The localization-and-estimation map generated by the map-generating part 104 is stored in the storage 102.

The localization estimation part 106 calculates two-dimensional distance information associated with the environment inherence object such as the wall around the transporter 1 (the transfer carriage 2), the fixed equipment, or the like in accordance with the first data obtained by the first detector 10. The localization estimation part 106 compares the calculated two-dimensional distance information to the localization-and-estimation map and extracts the predetermined region coincident with the two-dimensional distance information from the localization-and-estimation map.

The localization estimation part 106 calculates a relative angle (posture) and a relative position with respect to a planar direction of the transporter 1 in the predetermined region extracted in accordance with the extracted predetermined region and the calculated two-dimensional distance information. The localization estimation part 106 calculates an estimated position on the two-dimensional coordinate system of the transporter 1 in the localization-and-estimation map in accordance with the calculation result.

The route-generating part 108 calculates the shape of the obstacle present around the transporter 1 in accordance with the second data obtained by the second detector 11. The route-generating part 108 compares the two-dimensional distance information associated with the environment inherence object such as the wall around the transporter 1, the fixed equipment, or the like in the extracted predetermined region and the shape of the object present around the transporter 1 in accordance with the second data, and extracts the obstacle present around the transporter 1. The route-generating part 108 generates a route from the estimated position of the transporter 1 to the target position.

At this time, the route-generating part 108 generates a route that avoids the extracted obstacle. In accordance with the second data, the route-generating part 108 updates real-time information associated with the obstacles such as the number, the position, the direction of movement, the speed, the size, or the like at a predetermined timing, and updates route that avoids the obstacle. The predetermined timing is adjusted in accordance with the movement speed of the transporter 1. The route-generating part 108 may not only generate a route that avoids the obstacle in accordance with a moving state of the obstacle but also generate a route that avoids the obstacle by adjusting the speed of the transfer carriage 2

The control part 110 controls the driver 14 in accordance with the route generated by the route-generating part 108 and causes the transfer carriage 2 to travel along the route. The driver 14 independently controls the wheels 6 provided at right and left of the transfer carriage 2, and controls the speed and the direction of the transfer carriage 2. The control part 110 controls the driver 14 and thereby controls the transfer carriage 2 so as to be stopped or so as to avoid the obstacle in the case in which the obstacle comes close at a distance to be less than or equal to a previously-set reference. At this time, in the case in which the transport object D being transferred, the control part 110 controls deceleration of the driver 14 and the direction of the transfer carriage so as to prevent load collapse.

The control part 110 may cause the rotating light K to change a light emission pattern thereof and to light up in the case in which a human comes close at a distance to be less than or equal to a previously-set reference. As well as the rotating light K, the control part 1 10 may cause a speaker (not shown in the drawings) to emit sound and thereby notify the human. In the case in which the obstacle is the other transporter 1, the control part 110 may communicate with the other transporter 1 and adjust the relative distance with respect to the other transporter 1. The control part 110 may communicate with a control apparatus (not shown in the drawings) via a network and adjust the relative position with respect to the other transporter 1.

The docking control part 112 recognizes arrangement of the wheels C of the transport object D in accordance with the third data obtained by the third detector. The docking control part 112 recognizes a space between the wheels C on the lower surface side of the transport object D in accordance with the third data. The docking control part 112 recognizes the relative position and the posture of the transport object D. The distance between the pair of the wheels C facing each other in the travel direction P of the transport object D is different from distance between the pair of the wheels C facing each other in the direction orthogonal to the travel direction P. The docking control part 112 determines the insertion direction of the transfer carriage 2 with respect to the transport object D in accordance with the distance between the pair of the wheels C in the recognized travel direction P and the distance between the pair of the wheels C in the direction orthogonal to the travel direction P. The docking control part 112 generates a docking route in which the transfer carriage 2 is inserted between the wheels C in accordance with the third data.

The control part 110 controls the driver 14 in accordance with the docking route generated by the docking control part 112 and causes the transfer carriage 2 to be disposed at the transport object D. The control part 110 controls the driver 14 and causes the transfer carriage 2 to be inserted into the lower surface side of the transport object D from the back portion thereof. When the transfer carriage 2 reaches a predetermined position at the lower surface side of the transport object D, the control part 110 causes the driver 14 to be stopped, controls the lifter 4 so as to lift up the bottom plate D1 of the transport object D, and causes the transport object D to be in a state of being transportable.

Next, a controlling method of the transporter 1 will be described.

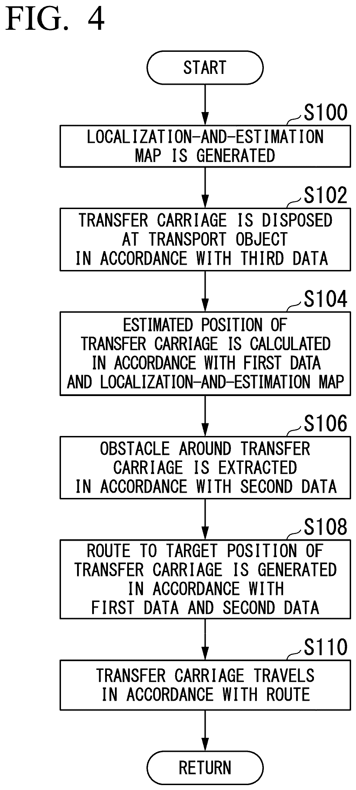

FIG. 4 shows a flowchart showing processes of a control method of the transporter 1. First of all, first data and second data are obtained in advance by causing the transporter 1 to travel by a manual operation in a region of a building or the like in which the transporter 1 is used. The localization estimation part 106 generates a localization-and-estimation map in accordance with first data (step S100). The first data is obtained by scanning an object at a first region around the transfer carriage at a position higher than the height position of an object present around the transfer carriage transporting a transport object.

The docking control part 112 recognizes a space between the wheels C of the transport object D in accordance with third data obtained by the third detector 12. The control part 110 causes the transfer carriage 2 to be disposed in the space at the lower side of the transport object D in accordance with the recognized space (step S102). The localization estimation part 106 calculates a shape of a peripheral region in accordance with the first data obtained by the first detector 10, compares the calculation result and the localization-and-estimation map, and extracts a predetermined region coincident with the localization-and-estimation map.

The localization estimation part 106 calculates an estimated position of the transfer carriage in the extracted predetermined region (step S104). The route-generating part 108 calculates a shape and a position of the peripheral region in accordance with the second data obtained by scanning the object at a second region around the transfer carriage 2, and extracts an obstacle around the transfer carriage 2 in accordance with the calculate shape and the localization-and-estimation map (step S106). The route-generating part 108 generates a route to a target position in accordance with the estimated position and generates a route to the target position, which avoids the obstacle in accordance with the first data and the second data (step S 108). The control part 110 controls the driver 14 in accordance with the route and causes the transfer carriage 2 to travel to the target position (step S110). In the case in which the other transport object is present, the steps after the step 102 are repeated.

As described above, according to the transporter 1, in a distribution center or a back yard of a shop, it is possible to automatically transfer the transport object D such as a roll box pallet or the like, in which, packages, commercial products, or the like are loaded. According to the transporter 1, since the first detector 10 is provided at the position higher than that of the obstacle or the like around the first detector, it is possible to calculate the estimated position of the transporter 1 without being affected by the obstacle. Since the second detector 11 detects the obstacle therearound, the transporter 1 can travel along the route to the target position while avoiding the obstacle.

### (Second Embodiment)

Hereinbelow, a second embodiment will be described. In the following description, identical names and identical reference numerals are used for the components which are identical to those of the above-described embodiment, and duplicate description is omitted (the same applies hereinafter).

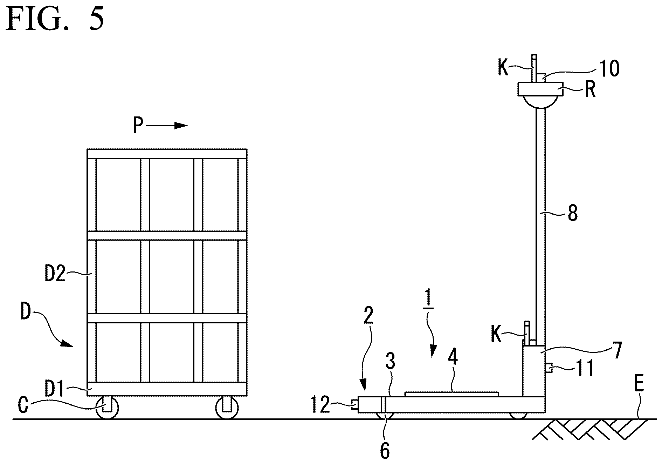

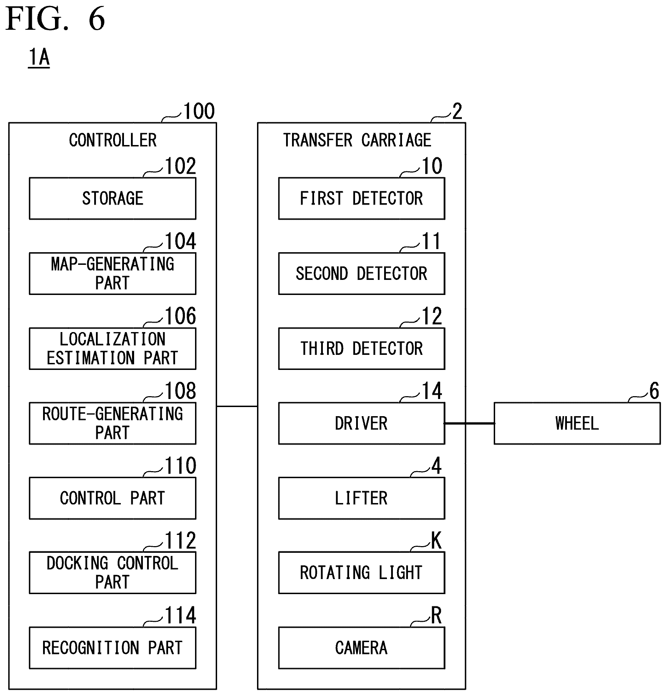

As shown in FIGS. 5 and 6, in a transporter 1A according to the second embodiment, a camera R that captures an image of a circumference of the transfer carriage 2 at a position at which the first detector 10 is provided may be provided. The camera R captures an image of, for example, a wide field of view. The camera R looks down upon the circumference of the transporter 1 from the position of the first detector 10 and captures an image. The camera R may be, for example, a depth camera that calculates a distance to an object.

The controller 100 may include a recognition part 114 that recognizes the transport object D and an object present around the transfer carriage 2 in accordance with an image data obtained by the camera R. The recognition part 114 extracts an obstacle around the transfer carriage 2 in accordance with the image data. The recognition part 114 may recognize the transport object D in accordance with the image data. The recognition part 114 extracts the transport object D in accordance with the image data, and recognizes a distance to the transport object D, a relative posture of the transport object D, and an insertion direction of the transfer carriage 2.

The control part 110 controls the driver 14 based on the recognition result recognized by the recognition part 114, causes the transfer carriage 2 to travel so as to be inserted into the lower surface side of the transport object D, and causes the transfer carriage 2 to be disposed at the lower surface side of the transport object D.

The route-generating part 108 generates a route to a target position, which avoids the obstacle in accordance with the position, the speed, the direction of movement, the size, or the like of the obstacle extracted by the recognition part 114. The control part 110 causes the transfer carriage 2 to travel to the target position while avoiding the obstacle in accordance with the generated route. The route-generating part 108 may extract the obstacle present in the circumference by use of the image data obtained by the camera R and the second data of the second detector 11. As the aforementioned camera R, a plurality of infrared distance sensors that measure a distance may be used.

As described above, according to the transporter 1A, by use of the camera R, it is possible to easily avoid the obstacle in the circumference. According to the transporter 1A, by use of the camera R, it is possible to dispose the transfer carriage 2 at the lower surface side of the transport object D. Additionally, when the transport object is unloaded at a transferring place, it is possible to arrange the transport object next to the other transport objects side by side.

### (Third Embodiment)

In the aforementioned embodiment, an object present around the transfer carriage 2 is extracted by use of the second detector 11 or the camera R. In the third embodiment, the object around the transfer carriage 2 may be extracted by use of the first data of the first detector 10. In the case in which, for example, a three-dimensional LRF that can also carries out scanning in a vertical direction is used as the first detector 10, the route-generating part 108 may extract an object such as the obstacle or the like around the transfer carriage 2 in accordance with the first data obtained by the first detector 10.

As described above, according to the third embodiment, it is possible to extract the object around the transfer carriage 2 in accordance with the first data obtained by the first detector 10, and it is possible to simplify a device configuration.

### (Fourth Embodiment)

The first detector 10 is attached to a high position via the support member 8. Consequently, there is a concern that the value of the first data varies due to an error in position at which the first detector 10 is attached or an effect of vibration generated along with movement of the transfer carriage 2. In the fourth embodiment, the controller 100 compares the second data obtained by the second detector 11 and the first data obtained by the first detector 10, and carries out calibration with respect to an error in position at which the first detector is attached or an error generated due to vibration.

At this time, a measurement object to be measured by the second detector 11 is selected from the environment inherence objects such as a wall, a pillar, or the like of a building, in which it is assumed that the shape at the detection position of the second detector 11 is the substantially same as that of the detection position of the first detector 10. Since the second detector 11 is provided at the housing 7 of the transfer carriage 2, the second data is stabilized more than the first data. For this reason, in the controller 100, it is possible to carry out calibration of the first data by carrying out verification by comparing the first data and the second data. The route-generating part 108 calculates the shape of the object of the circumference in accordance with the first data. The route-generating part 108 calculates the shape of the object of the circumference in accordance with the second data. The route-generating part 108 extracts characteristic parts, for example, the wall, the pillar, the corner, or the like of the building in accordance with the first data and the second data.

The route-generating part 108 compares a second characteristic portion of the building in accordance with the second data and a first characteristic portion of the building in accordance with the first data. The route-generating part 108 compares, for example, data associated with a distance, a posture, a shape, or the like of the second characteristic portion and data associated with a distance, a posture, a shape, or the like of the first characteristic portion, and thereby carries out calibration with respect to the error in position at which the first detector is attached or the error generated due to vibration.

According to the fourth embodiment, in the case of measuring the same measurement object by the second detector 11 and the first detector 10, the first data is compared to the second data stabilized more than the first data. As a result, it is possible to carry out the calibration with respect to the error in position at which the first detector 10 is attached or the error generated due to vibration which is included in the first data.

### (Fifth Embodiment)

In the fourth embodiment, the calibration with respect to the error in position at which the first detector 10 is attached or the error generated due to vibration which is included in the first data is carried out by comparing the first data of the first detector 10 and the second data of the second detector 11. In the fifth embodiment, the first data is corrected by detecting swing of the first detector 10.

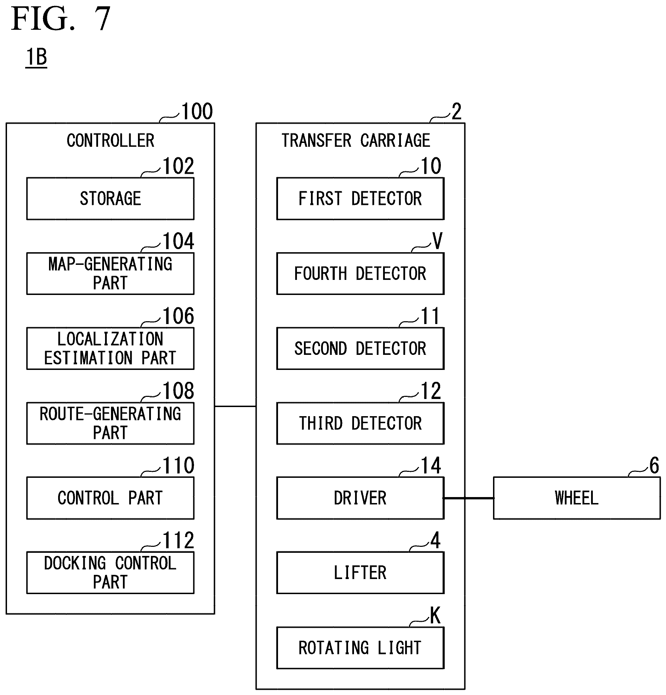

As shown in FIG. 7, a transporter 1B includes a fourth detector V that obtains fourth data representing swing of the first detector 10 of the transfer carriage 2. The fourth detector V is, for example, a six-axis acceleration sensor (inertial sensor). The fourth detector V is attached to a position near, for example, the first detector 10. The localization estimation part 106 calculates the posture of the first detector 10 in accordance with the fourth data obtained by the fourth detector V. In accordance with the calculated posture, the localization estimation part 106 corrects the first data obtained by the first detector 10 to be data associated with a state in which swing is not generated. In each of the aforementioned embodiments, although the map-generating part 104, the localization estimation part 106, the route-generating part 108, the docking control part 112, and the recognition part 114 are each software functional part, each of them may be a hardware functional part such as LSI or the like.

According to at least one embodiment described above, the autonomous mobile robot is autonomously movable, a driver 14 configured to cause the autonomous mobile robot to move; a first detector 10 provided at a position higher than a position in height of an object present around the autonomous mobile robot, the first detector being configured to obtain first data by scanning the object at a first region around the autonomous mobile robot; a second detector 11 configured to obtain second data by scanning the object at a second region around the autonomous mobile robot; a localization estimation part 106 configured to calculate an estimated position of the autonomous mobile robot in a predetermined region in accordance with the first data; a route-generating part 108 configured to calculate a position of the object present around the autonomous mobile robot in accordance with the second data, the route-generating part being configured to calculate a route to a target position in accordance with the estimated position and the position of the object; and a control part 110 configured to control the driver in accordance with the route, the control part being configured to cause the autonomous mobile robot to travel to the target position. Accordingly, the autonomous mobile robot can automatically travel in the environment in which a movable object is present around the autonomous mobile robot.

### DESCRIPTION OF REFERENCE NUMERALS

1...transporter, 1A...transporter, 1B...transporter, 2...transfer carriage, 3...load base, 4...lifter, 6...wheel, 7...housing, 8... support member, 10...first detector, 11...second detector, 12...third detector, 14...driver, 100...controller, 102...storage, 104...map-generating part, 106...localization estimation part, 108...route-generating part, 110...control part, 112...docking control part, 114...recognition part, C...wheel, D...transport object, D1...bottom plate, D2...frame, E...floor surface, K...rotating light, R...camera, V...fourth detector

## Claims

1. A transporter comprising an autonomous mobile robot (1, 1A, 1B) configured to transport a transport object (D), the transport object (D) including a plurality of wheels (C) provided under the transport object (D),
the autonomous mobile robot (1, 1A, 1B) comprising:
a driver (14) configured to cause the autonomous mobile robot (1, 1A, 1B) to move;
a first detector (10) attached to a position in height which is assumed in advance such that a surrounding existence object of an ambient environment is not present, the first detector (10) being configured to obtain first data by scanning an object at a first region around the autonomous mobile robot (1, 1A, and 1B);
a second detector (11) configured to obtain second data by scanning the surrounding existence object at a second region around the autonomous mobile robot (1, 1A, 1B);
a localization estimation part (106) configured to calculate an estimated position of the autonomous mobile robot (1, 1A, 1B) in an object region in which the transporter travels, in accordance with the first data;
a route-generating part (108) configured to calculate a position of the surrounding existence object present around the autonomous mobile robot (1, 1A, 1B) in accordance with the second data, the route-generating part (108) being configured to calculate a route to a target position in accordance with the estimated position of the autonomous mobile robot (1, 1A, 1B) in the object region and the position of the surrounding existence object;
a control part (110) configured to control the driver (14) in accordance with the route, the control part (110) being configured to cause the autonomous mobile robot (1, 1A, 1B) to travel to the target position; and
a third detector (12) configured to obtain third data associated with positions of the plurality of the wheels (C), wherein
the control part (110) controls the driver (14) in accordance with the third data to cause the autonomous mobile robot (1, 1A, 1B) to be disposed between a pair of the wheels (C) of the plurality of the wheels (C).

2. The transporter according to claim 1, wherein
the surrounding existence object present around the autonomous mobile robot (1, 1A, 1B) is movable.

3. The transporter according to claim 1, wherein
the surrounding existence object present around the autonomous mobile robot (1, 1A, 1B) is changeable in shape.

4. The transporter according to claim 1, wherein
the autonomous mobile robot (1, 1A, 1B) is a transfer carriage (2) configured to transport the transport object (D) .

5. The transporter according to claim 1, wherein
the first detector (10) is adjustable in height to be higher than the position in height of the surrounding existence object.

6. The transporter according to any one of claims 1 to 5, wherein
the first detector (10) is provided at a position in height higher than 1.8 m.

7. The transporter according to any one of claims 1 to 6, further comprising:
a camera (R) configured to capture an image of a region around the autonomous mobile robot (1, 1A, 1B) at a position at which the first detector (10) is provided; and
a recognition part (114) configured to recognize the transport object (D) and the surrounding existence object in accordance with image data obtained by the camera (R), wherein
the control part (110) controls the driver (14) in accordance with a recognition result recognized by the recognition part (114) to cause the autonomous mobile robot (1, 1A, 1B) to travel.

8. The transporter according to any one of claims 1 to 7, wherein
the route-generating part (108) calculates a position of the surrounding existence object in accordance with the first data.

9. The transporter according to any one of claims 1 to 8, wherein
the route-generating part (108) compares the second data to the first data and calibrates an error in position at which the first detector (10) is provided.

10. The transporter according to any one of claims 1 to 9, further comprising:
a fourth detector (V) configured to obtain fourth data representing swing of the first detector (10), wherein
the localization estimation part (106) corrects the first data in accordance with the fourth data.

11. A transporter control method, comprising:
obtaining first data by scanning an object at a position in height, which is assumed in advance such that a surrounding existence object of an ambient environment is not present, at a first region around an autonomous mobile robot (1, 1A, 1B), the autonomous mobile robot (1, 1A, 1B) being configured to transport a transport object (D), the transport object (D) including a plurality of wheels (C) provided under the transport object (D) ;
obtaining second data by scanning the surrounding existence object at a second region around the autonomous mobile robot (1, 1A, 1B);
obtaining third data associated with positions of the plurality of the wheels (C);
calculating an estimated position of the autonomous mobile robot (1, 1A, 1B) in an object region in which the transporter travels, in accordance with the first data;
calculating a position of the surrounding existence object in accordance with the second data;
calculating a route to a target position in accordance with the estimated position of the autonomous mobile robot (1, 1A, 1B) in the object region and the position of the surrounding existence object;
controlling a driver (14) in accordance with the route, the driver (14) being configured to cause the autonomous mobile robot (1, 1A, 1B) to transfer, causing the autonomous mobile robot (1, 1A, 1B) to travel to the target position; and
controlling the driver (14) in accordance with the third data to cause the autonomous mobile robot (1, 1A, 1B) to be disposed between a pair of the wheels (C) of the plurality of the wheels (C).

12. The transporter control method according to claim 11, wherein
the surrounding existence object present around the autonomous mobile robot (1, 1A, 1B) is movable.

13. The transporter control method according to claim 11 or claim 12, wherein
the surrounding existence object present around the autonomous mobile robot (1, 1A, 1B) is changeable in shape.

## Patentansprüche

1. Transporter, umfassend einen autonomen, mobilen Roboter (1, 1A, 1B), der konfiguriert ist, ein Transportobjekt (D) zu transportieren, wobei das Transportobjekt (D) eine Vielzahl von Rädern (C) beinhaltet, die unter dem Transportobjekt (D) vorgesehen sind,
wobei der autonome, mobile Roboter (1, 1A, 1B) umfasst:
einen Treiber (14), der konfiguriert ist, den autonomen, mobilen Roboter (1, 1A, 1B) zu veranlassen, sich zu bewegen;
einen ersten Detektor (10), der an einer Position in Höhe angebracht ist, von der vorab angenommen wird, dass ein Umgebungsexistenzobjekt einer Umgebungsumwelt nicht vorhanden ist, wobei der erste Detektor (10) konfiguriert ist, erste Daten zu ermitteln, durch Scannen eines Objektes in einer ersten Region um den autonomen, mobilen Roboter (1, 1A und 1B) herum;
einen zweiten Detektor (11), der konfiguriert ist, zweite Daten zu ermitteln, durch Scannen des umgebenden Existenz-Objekts in einer zweiten Region um den autonomen, mobilen Roboter (1, 1A, 1B) herum;
einen Lokalisierungs-Schätz-Teil (106), der konfiguriert ist, eine geschätzte Position des autonomen, mobilen Roboters (1, 1A, 1B) in einer Objektregion zu berechnen, in welcher sich der Transporter bewegt, entsprechend den ersten Daten;
einen Routen-Erzeugungsteil (108), der konfiguriert ist, eine Position des Umgebungsexistenzobjekts zu berechnen, dass um den autonomen, mobilen Roboter (1, 1A, 1B) herum vorhanden ist, gemäß den zweiten Daten, wobei der Routen-Erzeugungsteil (108) konfiguriert ist, eine Route zu einer Zielposition entsprechend der geschätzten Position des autonomen, mobilen Roboters (1, 1A, 1B) in der Objektregion und der Position des Umgebungsexistenzobjekts zu berechnen;
einen Steuerteil (110), der konfiguriert ist, den Treiber (14) entsprechend der Route zu steuern, wobei der Steuerteil (110) konfiguriert ist, den autonomen, mobilen Roboter (1, 1A, 1B) zu veranlassen, sich zur Zielposition zu bewegen; und
einen dritten Detektor (12), der konfiguriert ist, mit Position der Vielzahl der Räder (C) assoziierte dritte Daten zu ermitteln, wobei
der Steuer-Teil (110) den Timer auf 14 entsprechend den dritten Daten steuert, um den autonomen, mobilen Roboter (1, 1A, 1B) zu veranlassen, zwischen einem Paar der Räder (C) der Vielzahl der Räder (C) angeordnet zu werden.

2. Transporter gemäß Anspruch 1, wobei
das um den autonomen, mobilen Roboter (1, 1A, 1B) herum vorhandene Umgebungsexistenzobjekt beweglich ist.

3. Transporter gemäß Anspruch 1, wobei
das um den autonomen, mobilen Roboter (1, 1A, 1B) herum vorhandene Umgebungsexistenzobjekt formveränderlich ist.

4. Transporter gemäß Anspruch 1, wobei
der autonome, mobile Roboter (1, 1A, 1B) ein Transfer-Wagen (2) ist, der konfiguriert ist, das Transportobjekt (D) zu transportieren.

5. Transporter gemäß Anspruch 1, wobei
der erste Detektor (10) in der Höhe so justierbar ist, dass er höher als die Position in der Höhe des Umgebungsexistenzobjekts ist.

6. Transporter gemäß einem der Ansprüche 1 bis 5, wobei
der erste Detektor (10) an einer Höhen-Position höher als 1,8 m vorgesehen ist.

7. Transporter gemäß einem der Ansprüche 1 bis 6, weiter umfassend:
eine Kamera (R), die konfiguriert ist, ein Bild einer Region um den autonomen, mobilen Roboter (1, 1A, 1B) an einer Position aufzunehmen, an welcher der erste Detektor (10) vorgesehen ist; und
einen Erkennungsteil (114), der konfiguriert ist, das Transportobjekt (D) und das Umgebungsexistenzobjekt entsprechend Bilddaten, welche durch die Kamera (R) ermittelt werden, zu erkennen, wobei
der Steuerteil (110) den Treiber (14) entsprechend einem durch den Erkennungsteil (114) erkannten Erkennungsergebnis zu steuern, um den autonomen, mobilen Roboter (1,1 A, 1B) zu veranlassen, sich zu bewegen.

8. Transporter gemäß einem der Ansprüche 1-7, wobei
der Routenerzeugungsteil (108) eine Position des Umgebungsexistenzobjekts gemäß den ersten Daten berechnet.

9. Transporter gemäß einem der Ansprüche 1-8, wobei
der Routenerzeugungsteil (108) die zweiten Daten mit den ersten Daten vergleicht und einen Fehler an einer Position, an welcher der erste Detektor (10) vorgesehen ist, kalibriert.

10. Transporter gemäß einem der Ansprüche 1-9, weiter umfassend:
einen vierten Detektor (V), der konfiguriert ist, vierte Daten zu ermitteln, die das Schwingen des ersten Detektors (10) repräsentieren, wobei
der Lokalisierungs-Schätz-Teil (106) die ersten Daten anhand der vierten Daten korrigiert.

11. Transporter-Steuerverfahren, umfassend:
Ermitteln erster Daten durch Scannen eines Objekts an einer Position in der Höhe, die vor ab so angenommen wird, dass ein Umgebungsexistenzobjekt einer Umgebungsumwelt nicht vorhanden ist, an einer ersten Region um einen autonomen, mobilen Roboter (1, 1A, 1B) herum, wobei der autonome, mobile Roboter (1, 1A, 1B) konfiguriert ist, ein Transportobjekt (D) zu transportieren, wobei das Transportobjekt (D) eine Vielzahl von Rädern (C) beinhaltet, die unter dem Transportobjekt (D) vorgesehen sind;
Ermitteln zweiter Daten durch Scannen des Umgebungsexistenzobjekts an einer zweiten Region um den autonomen, mobilen Roboter (1, 1A, 1B) herum;
Ermitteln dritter Daten, die mit Positionen der Vielzahl der Räder (C) assoziiert sind;
Berechnen einer geschätzten Position des autonomen, mobilen Roboters (1, 1A, 1B) in eine Objektregion, in welcher sich der Transporter bewegt, entsprechend den ersten Daten;
Berechnen einer Position des Umgebungsexistenzobjekts entsprechend den zweiten Daten;
Berechnen einer Route zu einer Zielposition entsprechend der geschätzten Position des autonomen, mobilen Roboters (1, 1A, 1B) in der Objektregion und der Position des Umgebungsexistenz Objekts;
Steuern eines Treibers (14) entsprechend der Route, wobei der Treiber (14) konfiguriert ist, den autonomen, mobilen Roboter (1, 1A, 1B) zu veranlassen, zu transferieren, was den autonomen, mobilen Roboter (1, 1A, 1B) veranlasst, sich zur Zielposition zu bewegen; und
Steuern des Treibers (14) gemäß den dritten Daten, um den autonomen, mobilen Roboter (1, 1A, 1B) zu veranlassen, zwischen ein paar der Räder (C) der Vielzahl der Räder (C) angeordnet zu sein.

12. Transporter-Steuerverfahren gemäß Anspruch 11, wobei
das um den autonomen, mobilen Roboter (1, 1A, 1B) herum vorhandene Umgebungsexistenzobjekt beweglich ist.

13. Transporter-Steuerverfahren gemäß Anspruch 11 oder 12, wobei
das um den autonomen, mobilen Roboter (1, 1A, 1B) herum vorhandene Umgebungsexistenzobjekt formveränderlich ist.

## Revendications

1. Transporteur comprenant un robot (1, 1A, 1B) mobile autonome configuré pour transporter un objet (D) de transport, l'objet (D) de transport incluant une pluralité de roues (C) prévues sous l'objet (D) de transport,
le robot (1, 1A, 1B) mobile autonome comprenant :
un pilote (14) configuré pour amener le robot (1, 1A, 1B) mobile autonome à bouger ;
un premier détecteur (10) fixé à une position en hauteur qui est supposée à l'avance de telle manière qu'un objet existant environnant d'un environnement ambiant n'est pas présent, le premier détecteur (10) étant configuré pour obtenir des premières données par balayage d'un objet au niveau d'une première région autour du robot (1, 1A et 1B) mobile autonome ;
un deuxième détecteur (11) configuré pour obtenir des deuxièmes données par balayage de l'objet existant environnant au niveau d'une deuxième région autour du robot (1, 1A, 1B) mobile autonome ;
une partie (106) d'estimation de localisation configurée pour calculer une position estimée du robot (1, 1A, 1B) mobile autonome dans une région d'objet dans laquelle le transporteur se déplace, conformément aux premières données ;
une partie (108) de génération d'itinéraire configurée pour calculer une position de l'objet existant environnant présent autour du robot (1, 1A, 1B) mobile autonome conformément aux deuxièmes données, la partie (108) de génération d'itinéraire étant configurée pour calculer un itinéraire vers une position cible conformément à la position estimée du robot (1, 1A, 1B) mobile autonome dans la région d'objet et la position de l'objet existant environnant ;
une partie (110) de commande configurée pour commander le pilote (14) conformément à l'itinéraire, la partie (110) de commande étant configurée pour amener le robot (1, 1A, 1B) mobile autonome à se déplacer vers la position cible ; et
un troisième détecteur (12) configuré pour obtenir des troisièmes données associées aux positions de la pluralité des roues (C), dans lequel
la partie (110) de commande commande le pilote (14) conformément aux troisièmes données pour amener le robot (1, 1A, 1B) mobile autonome à être disposé entre une paire des roues (C) de la pluralité des roues (C).

2. Transporteur selon la revendication 1, dans lequel
l'objet existant environnant présent autour du robot (1, 1A, 1B) mobile autonome est mobile.

3. Transporteur selon la revendication 1, dans lequel
l'objet existant environnant présent autour du robot (1, 1A, 1B) mobile autonome peut changer de forme.

4. Transporteur selon la revendication 1, dans lequel
le robot (1, 1A, 1B) mobile autonome est un chariot (2) de transfert configuré pour transporter l'objet (D) de transport.

5. Transporteur selon la revendication 1, dans lequel
le premier détecteur (10) peut être réglé en hauteur pour être plus haut que la position en hauteur de l'objet existant environnant.

6. Transporteur selon l'une quelconque des revendications 1 à 5, dans lequel
le premier détecteur (10) est prévu au niveau d'une position en hauteur supérieure à 1,8 m.

7. Transporteur selon l'une quelconque des revendications 1 à 6, comprenant en outre :
un appareil (R) de prise de vues configuré pour capturer une image d'une région autour du robot (1, 1A, 1B) mobile autonome au niveau d'une position au niveau de laquelle le premier détecteur (10) est prévu ; et
une partie (114) de reconnaissance configurée pour reconnaître l'objet (D) de transport et l'objet existant environnant conformément à des données d'image obtenues par l'appareil (R) de prise de vues, dans lequel
la partie (110) de commande commande le pilote (14) conformément à un résultat de reconnaissance reconnu par la partie (114) de reconnaissance pour amener le robot (1, 1A, 1B) mobile autonome à se déplacer.

8. Transporteur selon l'une quelconque des revendications 1 à 7, dans lequel
la partie (108) de génération d'itinéraire calcule une position de l'objet existant environnant conformément aux premières données.

9. Transporteur selon l'une quelconque des revendications 1 à 8, dans lequel
la partie (108) de génération d'itinéraire compare les deuxièmes données aux premières données et étalonne une erreur dans la position au niveau de laquelle le premier détecteur (10) est prévu.

10. Transporteur selon l'une quelconque des revendications 1 à 9, comprenant en outre :
un quatrième détecteur (V) configuré pour obtenir des quatrièmes données représentant l'oscillation du premier détecteur (10), dans lequel
la partie (106) d'estimation de localisation corrige les premières données conformément aux quatrièmes données.

11. Procédé de commande de transporteur, comprenant :
l'obtention de premières données par balayage d'un objet au niveau d'une position en hauteur, qui est supposée à l'avance de telle manière qu'un objet existant environnant d'un environnement ambiant n'est pas présent, au niveau d'une première région autour d'un robot (1, 1A, 1B) mobile autonome, le robot (1, 1A, 1B) mobile autonome étant configuré pour transporter un objet (D) de transport, l'objet (D) de transport incluant une pluralité de roues (C) prévues sous l'objet (D) de transport ;
l'obtention de deuxièmes données par balayage de l'objet existant environnant au niveau d'une deuxième région autour du robot (1, 1A, 1B) mobile autonome ;
l'obtention de troisièmes données associées aux positions de la pluralité des roues (C) ;
le calcul d'une position estimée du robot (1, 1A, 1B) mobile autonome dans une région d'objet dans laquelle le transporteur se déplace, conformément aux premières données ;
le calcul d'une position de l'objet existant environnant conformément aux deuxièmes données ;
le calcul d'un itinéraire vers une position cible conformément à la position estimée du robot (1, 1A, 1B) mobile autonome dans la région d'objet et la position de l'objet existant environnant ;
la commande d'un pilote (14) conformément à l'itinéraire, le pilote (14) étant configuré pour amener le robot (1, 1A, 1B) mobile autonome à effectuer un transfert, amenant le robot (1, 1A, 1B) mobile autonome à se déplacer vers la position cible ; et
la commande du pilote (14) conformément aux troisièmes données pour amener le robot (1, 1A, 1B) mobile autonome à être disposé entre une paire des roues (C) de la pluralité des roues (C).

12. Procédé de commande de transporteur selon la revendication 11, dans lequel
l'objet existant environnant présent autour du robot (1, 1A, 1B) mobile autonome est mobile.

13. Procédé de commande de transporteur selon la revendication 11 ou la revendication 12, dans lequel
l'objet existant environnant présent autour du robot (1, 1A, 1B) mobile autonome peut changer de forme.
